# EUROPÄISCHE PATENTSCHRIFT

(11) **EP 0 668 118 B1**
(45) Veröffentlichungstag und Bekanntmachung des Hinweises auf die Patenterteilung: **07.01.1999**
(21) Anmeldenummer: 95100816.8
(22) Anmeldetag: 21.01.1995
(51) Int. Cl.: B23B 45/02, G01D 5/22, G08C 19/08

(54) **Elektrowerkzeug mit Spannvorrichtung zur Erfassung der Öffnungsweite**
Electric power tool with a clamping device detecting its opening width
Outil électrique avec un dispositif de serrage pour détecter la largeur d'ouverture

(30) Priorität: 17.02.1994 DE 4404988
(43) Veröffentlichungstag der Anmeldung: 23.08.1995
(73) Patentinhaber: ROBERT BOSCH GMBH, 70442 Stuttgart (DE)
(72) Erfinder: Leitenberger, Thomas, Dipl.-Ing. (BA), D-70565 Stuttgart (DE); Pfaundler, Julian, Dipl.-Ing. (FH), D-70794 Filderstadt (DE); Seel, Ottmar, Dr.-Ing., D-70771 Leinfelden-Echterdingen (DE); Hirschburger, Wolfgang, Dipl.-Ing., D-72762 Reutlingen (DE)

(56) Entgegenhaltungen:
- EP-A- 0 018 465
- EP-A- 0 106 186
- EP-A- 0 126 253
- DE-A- 3 602 107
- DE-A- 4 025 101
- US-A- 3 701 136
- US-A- 4 783 626
- PATENT ABSTRACTS OF JAPAN vol. 7, no. 59 (M-199) 11. März 1983 & JP-A-57 205 012 (HITACHI KOKI K.K.) 16. Dezember 1982

## Beschreibung

### Stand der Technik

Die Erfindung geht aus von einem Elektrowerkzeug mit einer Spannvorrichtung nach der Gattung des Hauptanspruchs und wie aus EP-A-0018465 bekannt. Es ist schon bekannt, die Öffnungsweite einer Spannvorrichtung mittels eines induktiven Sensors kontaktlos zu erfassen. Dabei wird an einem rotierenden Teil der Spannvorrichtung eine Magnetisierung aufgebracht, die sich in Abhängigkeit vom Öffnungswinkel der Spannvorrichtung relativ zu dem feststehenden Sensor verschiebt. Allerdings wird bei der bekannten Spannvorrichtung die Öffnungsweite der Spannvorrichtung nur bei rotierender Welle erfaßt, nicht jedoch im Stillstand. Vielfach ist es jedoch erwünscht, schon im Stillstand des Elektrowerkzeugs die Öffnungsweite der Spannvorrichtung und dabei beispielsweise den Durchmesser eines zu verwendenden Bohrers zu erfassen, um in Verbindung mit einer bevorzugten Getriebegangwahl die günstigste Motordrehzahl einstellen zu können. Dieses ist besonders dann erforderlich, wenn für eine automatisch einzustellende Drehzahl auch der gewählte Gang des Getriebes in die Steuerung einzugeben ist.

Aus der EP 0 018 465 A1 ist eine Steuervorrichtung und ein Verfahren zur Steuerung der Drehzahl eines tragbaren Elektrowerkzeuges bekannt. Bei diesem Elektrowerkzeug, insbesondere einer Bohrmaschine, wird die Drehzahl in Abhängigkeit vom Öffnungswinkel seiner Spannvorrichtung gesteuert. Dabei wird ein Abtaststift an die Spannvorrichtung derart angekoppelt, daß bei Änderung der Öffnungsweite der Spannvorrichtung der Abtaststift axial verschoben wird. Über einen Hebel wird diese Verschiebung auf ein Potentiometer geleitet, das den Motorstrom entsprechend einstellt. Bei dieser Lösung scheint jedoch ungünstig, daß durch Verschleiß und Vibrationen, wie sie beim Schlagbohren auftreten, kontinuierlich eine Verschiebung des Abtaststiftes in axialer Richtung erfolgt, so daß damit nicht nur ein unzuverlässiger Betrieb, sondern auch große Drehzahlschwankungen verbunden sind.

### Vorteile der Erfindung

Das erfindungsgemäße Elektrowerkzeug mit den kennzeichnenden Merkmalen des Hauptanspruchs hat demgegenüber den Vorteil, daß der Sensor die Öffnungsweite der Spannvorrichtung bereits bei stillstehender Welle erfaßt. Eine ungünstige Drehzahleinstellung, die durch einen ungünstig gewählten Gang entstehen könnte, wird dadurch vermieden. Darüber hinaus kann vorteilhaft schnell vom Bediener ein Bohrerdurchmesser bestimmt werden, ohne daß zusätzliche Meßmittel wie z.B. eine Schieblehre oder dergleichen erforderlich sind.

Durch die in den abhängigen Ansprüchen angegebenen Maßnahmen sind vorteilhafte Weiterbildungen und Verbesserungen des im Hauptanspruch angegebenen Elektrowerkzeuges möglich. Durch den Sensor wird bei ausgeschaltetem Motorschalter in Abhängigkeit von der Position des Magnetringes ein etwa proportionales Spannungssignal an die Auswerteeinrichtung geliefert. Wegen der Proportionalität kann damit eine einfache Anzeige für die Öffnungsweite der Spannvorrichtung vorgesehen werden, die wegen der Proportionalität der Signale keine komplizierten Korrekturglieder benötigt.

Durch Verwendung eines Hall- oder eines magnetoresistiven Sensors kann vorteilhaft die Öffnungsweite bei stehender Welle erfaßt werden, da die Eintauchtiefe des Magnetringes das elektrische Feld des Sensors ändert und somit die Änderung ein Maß für die Öffnungsweite der Spannvorrichtung ist.

Vorteilhaft ist weiter, daß der Magnetring auf einem Träger befestigt ist, der von der Spannvorrichtung axial verschiebbar ist. Dadurch kann der Magnetring vorgefertigt werden und zur Montage einfach auf den Träger aufgeschoben und arretiert werden.

Als besonders preiswerte Ausführung für den Magnetring eignen sich Dauermagnete, wobei der Magnetring kontinuierlich, wellenförmig (sinusförmig) oder partiell ausgebildet sein kann. Auch kann der Magnetring schräg auf den Träger aufgebracht werden, so daß er ähnlich wie eine Trommelscheibe arbeitet. Bei Drehung der Welle ergeben sich dann sinusförmige Spannungen am Sensor, aus deren Periodendauer zusätzlich die Drehzahl ermittelt werden kann.

Besonders vorteilhaft ist die Verwendung von zwei Spulen in einem Sensor, da durch Quotientenbildung oder Differenzbildung sowohl elektromagnetische Störfelder als auch Temperatureinflüsse eliminiert werden können. Dadurch wird die Meßeinrichtung weitgehend störunempfindlich. Auch ist vorteilhaft, die zweite Spule als Referenzspule auszubilden und so anzuordnen, daß sie zusammen mit der ersten Spule in je einem Brückenzweig einer Brückenschaltung angeordnet ist. Dadurch können kleinste Spannungsänderungen, die im Querzweig der Brücke abgreifbar sind, hinreichend genau ausgewertet werden, ohne daß sie von Störsignalen überlagert werden.

### Zeichnung

Ausführungsbeispiele der Erfindung sind in der Zeichnung dargestellt und werden in der nachfolgenden Beschreibung näher erläutert. Es zeigen Figur 1 schematisch ein erstes Ausführungsbeispiel, Figur 1a zeigt einen Träger für einen Magnetring, Figur 1b zeigt ein erstes Diagramm, Figur 1c zeigt eine erste Auswerteschaltung, Figur 2 zeigt ein zweites Ausführungsbeispiel, Figur 3 zeigt ein zugehöriges Diagramm, Figur 4 zeigt ein drittes Ausführungsbeispiel, Figur 5 zeigt einen zweiten Träger, Figur 6 zeigt eine zweite Auswerteschaltung, Figur 7a zeigt einen Ausschnitt, Figur 7b zeigt ein zugehöriges Diagramm, Figur 8 zeigt ein viertes Ausführungsbeispiel, Figur 9 zeigt ein zugehöriges Diagramm, Figur 10 zeigt ein fünftes Ausführungsbeispiel, Figur 11 zeigt ein sechstes Ausführungsbeispiel und Figur 12 zeigt ein siebtes Ausführungsbeispiel.

### Beschreibung der Ausführungsbeispiele

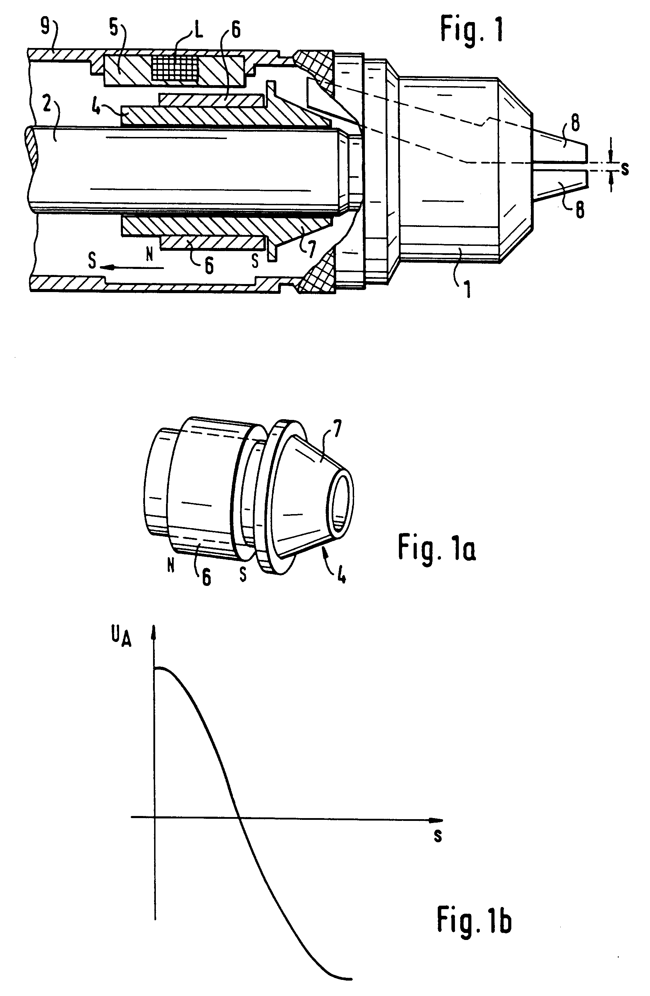

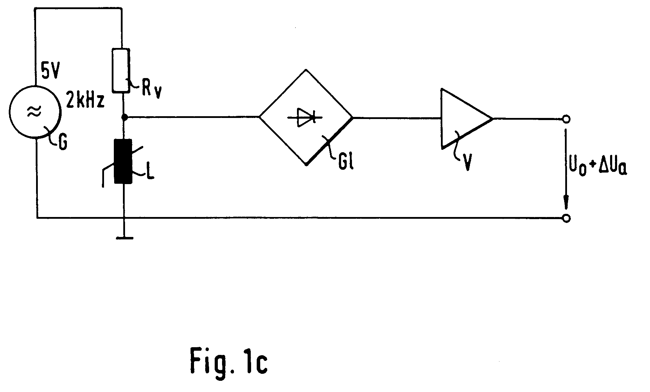

Figur 1 zeigt schematisch ein erstes Ausführungsbeispiel der Erfindung, wobei eine Spannvorrichtung 1 mit Spannbacken 8 derart ausgebildet ist, daß die Spannbacken 8 über eine keilförmige schiefe Ebene beim Öffnen oder Schließen der Spannvorrichtung einen Träger 7 axial und spielfrei auf einer Welle 2 verschieben. Der Träger 7 ist entsprechend der Figur 1a zylindrisch ausgebildet und trägt an einem Kopfende einen konusförmigen Ring 4. Auf dem Träger 7 ist vorzugsweise ein zylindrischer Magnetring 6 fest angeordnet. Um ein Spiel auf der Welle 2 zu vermeiden, wird der Träger 7 mit einer nicht dargestellten Feder gegen die schiefe Ebene der Spannbacken 8 gedrückt. Die Welle 2 ist die Antriebswelle beispielsweise einer Handbohrmaschine, wobei die Welle über ein nicht dargestelltes Getriebe mit dem Elektromotor des Handwerkzeuges mechanisch gekoppelt ist. Im Bewegungsraum des Trägers 7 auf der Welle 2 ist feststehend am Gehäuse 9 ein Sensor 5 angeordnet, der als Hall- oder magnetoresistiver Sensor ausgebildet ist. Vorzugsweise ist der Sensor 5 als Spule L ausgebildet. Die Anschlußleitungen der SpuleL sind mit einer nicht dargestellten Steuervorrichtung verbunden, die per se bekannt ist. Zwischen dem Sensor 5 und dem Magnetring 6 ist ein Luftspalt vorhanden, so daß zwischen dem Magnetring 6 und dem Sensor 5 keine Berührung stattfindet. Wie dem ersten Diagramm gemäß der Figur 1b entnehmbar ist, ist der Sensor 5 so ausgebildet, daß beim Öffnen der Spannbacken 8 mit der Spannweite s beispielsweise in der Spule des Sensors 5 eine Spannung U_{A} gebildet wird, die je nach Eintauchtiefe des Magnetringes 6 in das elektromagnetische Feld des Sensors 5 ihren Wert ändert. Ein typischer Kurvenverlauf ist in Figur 1b dargestellt. Ist die Spannvorrichtung geschlossen, dann ist beispielsweise die Spannung U_{A} am größten. Wird die Spannvorrichtung geöffnet, dann taucht der Magnetring 6 in das Magnetfeld des Sensors 5 ein, so daß die Spannung abnimmt. Taucht bei weiter geöffneten Spannbacken der Magnetring 6 aus dem Magnetfeld des Sensors 5 heraus, dann wird die Spannung negativ und steigt betragsmäßig wieder an.

Alternativ kann an Stelle des Magnetrings 6 ein Weicheisenzylinder auf den Ring 4 aufgebracht sein. Der Sensor 5 ist dann als Spule oder magnetoresistiver Sensor mit einem Stützfeld ausgebildet.

Eine Auswerteschaltung zum ersten Ausführungsbeispiel der Figur 1 ist in Figur 1c dargestellt. Gemäß Figur 1c wird die Spule L des Sensors 5 über einen Vorwiderstand Rᵥ von einem Wechselspannungsgenerator G gespeist, der beispielsweise bei 5 Volt mit 2kHz arbeitet. Die zwischen dem Vorwiderstand Rᵥ und der Spule L anliegende Spannung wird über einen Gleichrichter Gl gleichgerichtet und anschließend auf einen Verstärker V geführt. Am Ausgang des Verstärkers liegt dann eine Spannung an, die sich aus einer Grundspannung U₀ und einer Differenzspannung Δ Uₐ zusammensetzt. Die Spannung Δ Uₐ ist dabei proportional zur Öffnungsweite S der Spannbacken 8.

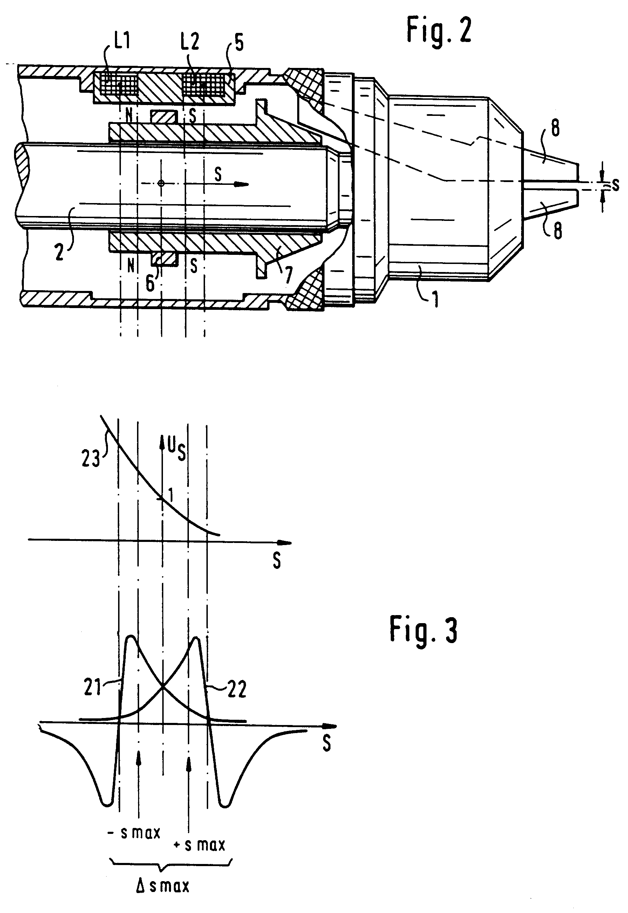

Figur 2 zeigt ein zweites Ausführungsbeispiel, das ähnlich aufgebaut ist wie das erste Ausführungsbeispiel. Allerdings hat der Sensor zwei nebeneinander angeordnete Magnetfeldsensoren (Hallsensoren) L1,L2. Der Abstand der beiden Sensoren L1, L2 ist größer als die Länge des magnetischen Zylinders. Hierdurch befinden sich die Sensoren L1, L2 bezüglich des Magneten in dessen Fernfeld. In dem darunter liegenden Diagramm (Figur 3) ist der Feldstärkeverlauf bei Lageveränderung des Magneten am Ort des jeweiligen Sensors L1, L2 dargestellt. So zeigt die Kurve 21 beispielsweise den Feldstärkenverlauf am Ort des Sensors L1 und die Kurve 22 den Verlauf des Sensors L2. Durch Division der beiden Kurven erhält man die Kurve 23, die in etwa proportional zur Öffnungsweite S der Spannvorrichtung verläuft. Durch Division werden vorteilhaft beispielsweise Temperaturfehler eliminiert.

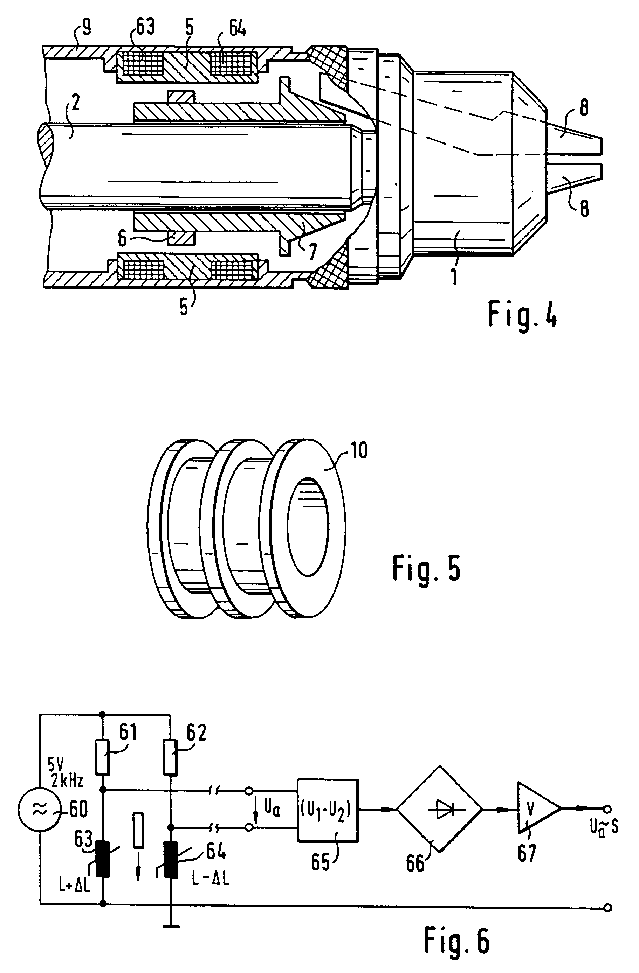

Ein drittes Ausführungsbeispiel ist in den Figuren 4, 5, 6 dargestellt. Dieses dritte Ausführungsbeispiel unterscheidet sich vom zweiten Ausführungsbeispiel dadurch, daß der Sensor 5 nunmehr zwei Spulen 63, 64 anstelle von Magnetfeldsensoren aufweist. Die Spulen sind so gewickelt, daß deren Induktivität sich bei Lageveränderung des magnetisch leitfähigen Metallzylinders gegensinnig verändert. Figur 5 zeigt einen Spulenkörper 10, der zur Aufnahme der beiden Spulen 63, 64 zwei Kammern aufweist. Zur Erfassung der Induktivitätsänderung ist gemäß Figur 6 eine Auswerteschaltung vorgesehen, bei der die beiden Spulen 63, 64 zusammen mit zwei Widerständen 61, 62 in einer Brückenschaltung angeordnet sind. Diese Brückenschaltung wird wiederum von einem Wechselspannungsgenerator 60 gespeist. Der Mittenabgriff wird einem Subtrahierer 65 zugeleitet, der die Differenzspannung im Mittenzweig der Brücke erfaßt. Nach anschließender Gleichrichtung (Position 66) und Verstärkung (Position 67) steht das Ausgangssignal Uₐ zur Verfügung. Dieses Ausgangssignal Uₐ ist proportional zur Eintauchtiefe des Magnetringes und damit proportional zur Öffnungsweite S der Spannvorrichtung.

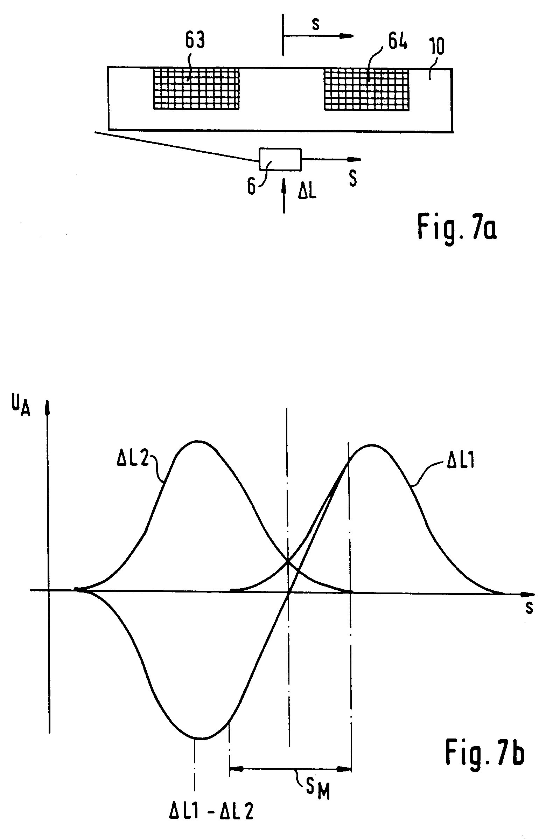

Anhand der Figuren 7a und 7b wird die Funktionsweise näher erläutert. Figur 7a zeigt schematisch den Spulenträger 10, der in den beiden Kammern die Spulen 63, 64 aufnimmt. Schematisch ist unter den Spulenträger 10 ist der Magnetring 6 angeordnet, der sich parallel zur Achse des Spulenkörpers 10 in Abhängigkeit von den der Öffnungsweite S der Spannvorrichtung 8 bewegt. In Figur 7b ist unter Zuordnung der Position des Magnetringes gemäß der Figur 7a der Magnetfeldverlauf der beiden Spulen 63, 64 dargestellt. Durch die relative Bewegung des Magnetringes zu den Spulen 63, 64 ändern sich die Induktivitäten der beiden Spulen, wie in den Kurven der Figur 7b mit Δ L1 bzw. Δ L2 dargestellt ist. Die Differenz der beiden Kurven Δ L1, Δ L2 ergibt die Kurve Δ L1 - Δ L2. Entsprechend kann dieser Kurve eine bestimmte Öffnungsweite zugeordnet werden, wie durch das Zeichen S_{M} dargestellt ist. Durch die Subtraktion der beiden Sensorsignale ergibt sich damit ein einfacher Differentialsensor.

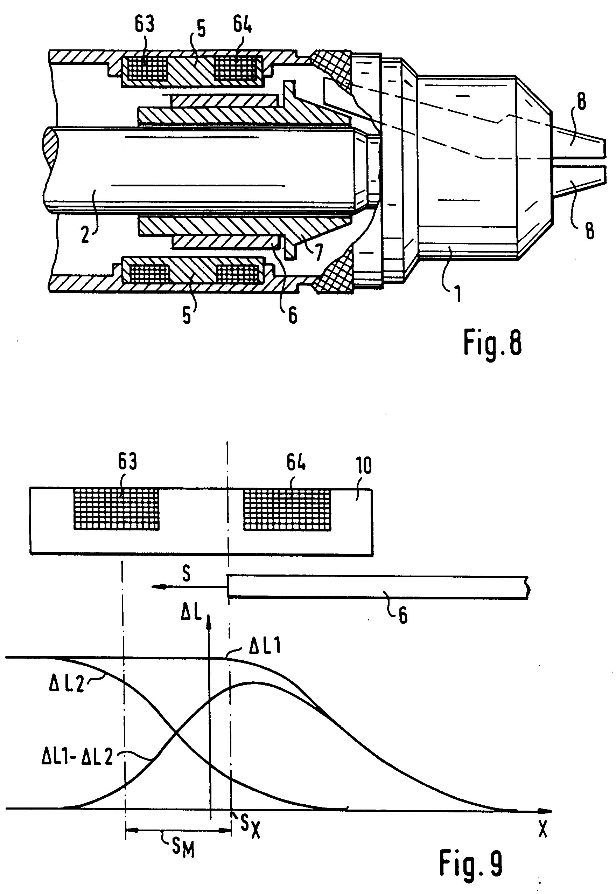

Die Figuren 8 und 9 zeigen ein viertes Ausführungsbeispiel mit einer veränderlichen Induktivität mit einem Referenzglied im Brückenzweig. Ähnlich wie im dritten Ausführungsbeispiel wird nunmehr eine der beiden Spulen 63, 64 durch eine Referenzspule 64 ersetzt. Die Referenzspule 64 ist so angeordnet, daß sie vom magnetisch leitfähigen Metallzylinder 6, der nunmehr anstelle des Magnetringes verwendet wird, vollständig durchdrungen ist. Diese Anordnung ist weitgehend unabhängig von der Geometrie der umliegenden Metallteile. Durch eine geeignete Dimensionierung der Meßeinrichtung hinsichtlich des Abstandes der Spulen zueinander, der Länge des vorzugsweise Weicheisenzylinders 6 und des Luftspalts kann der Meßbereich so verändert werden, daß eine gute Linearität zwischen dem Differenzsignal und der Öffnungsweite S erreicht wird. Diese Anordnung ist gegen mechanische Toleranzen bezüglich des Trägers, des Zylinders, der Spule und dem Luftspalt unkritisch. Ein weiterer Vorteil ist, daß Störeinflüsse durch elektromagnetische Felder sowie Temperatureinflüsse weitgehend unberücksichtigt bleiben. Durch die einfache konstruktive Ausgestaltung ist auch die Herstellung kostengünstig.

Figur 9 zeigt den zugehörigen Verlauf der Magnetfeldstärken in Abhängigkeit von dem Weg X bzw. von der Öffnungsweite S. Der Kurvenverlauf ist ähnlich wie bei dem zuvor beschriebenen Ausführungsbeispiel.An der Positon S_{X} beträgt der Abstand zur Spule 63 S_{M}.

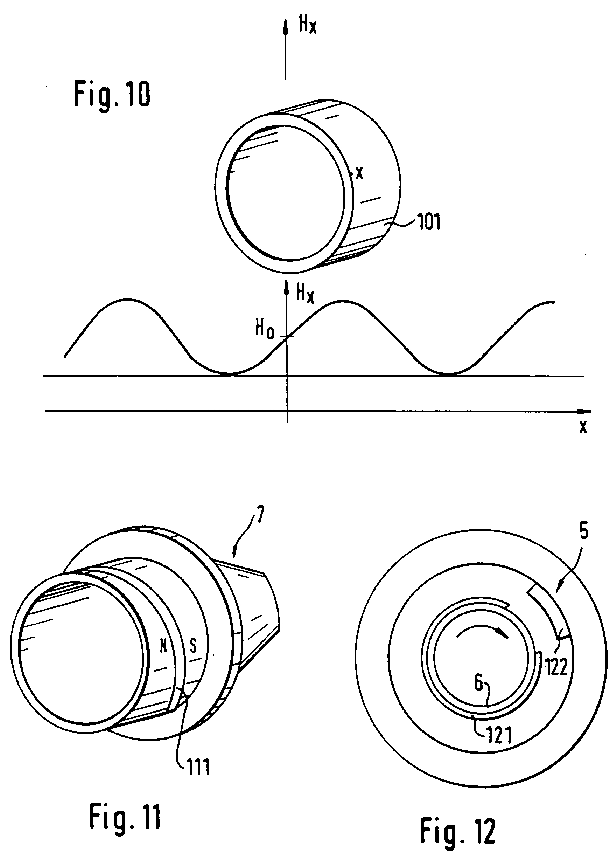

Die Figuren 10 bis 12 zeigen weitere Ausführungsbeispiele, bei denen neben der Erfassung der Öffnungsweite der Spannvorrichtung auch die Drehzahl der rotierenden Welle bzw. der Spannvorrichtung meßbar ist. Ausgehend von dem zweiten Ausführungsbeispiel der Figur 2 zeigt Figur 10 jedoch einen Magnetring 101, der nicht gleichmäßig über den Umfang magnetisiert ist, sondern beispielsweise sinusförmig, wobei die sinusförmige Magnetisierung über die Abwicklung des Magnetrings 101 aufgetragen ist. Das darunter liegende Diagramm zeigt die Feldstärkenverteilung H_{X} für eine Stelle X am Umfang des Magnetringes 101. Die Messung der Öffnungsweite S erfolgt in der gleichen Weise, wie es zu Figur 2 beschrieben wurde. Zusätzlich kann bei drehender Welle jedoch aus der Periodendauer der gemessenen Feldstärke die Drehzahl der Welle dadurch ermittelt werden, daß beispielsweise aus der Zeitdifferenz von zwei nachfolgenden Maximal- bzw. Minimalwerten der Feldstärke die Periodendauer bzw. die Drehzahl der Welle bestimmt wird.

Eine praktische Ausgestaltung einer sinusförmigen Magnetisierung des Magnetringes ist in Figur 11 dargestellt. Hier wurde auf dem Magnetring in Art einer Trommelscheibe über den Umfang eine schräg verlaufende Magnetisierung aufgebracht. Bei Drehung des Magnetringes entsteht somit gegenüber einem Fixpunkt ebenfalls ein sinusförmig verlaufendes elektromagnetisches Feld. Aus diesem Feld wird, wie zuvor beschrieben, der Öffnungswinkel der Spannvorrichtung und die Drehzahl errechnet.

Figur 12 zeigt ein siebtes Ausführungsbeispiel, das vom vierten Ausführungsbeispiel der Figuren 8, 9 abgeleitet ist. Gemäß der Figur 12 wurde der Weicheisenzylinder 121 so ausgeführt, daß er nicht ganz geschlossen ist und somit ein Stück unterbrochen wurde. Am Spulenkörper des Sensors 5 wurde nun das entsprechende Fehlstück angebracht. Die Ermittlung der Öffnungsweite S der Spannvorrichtung 1 erfolgt entsprechend den Figuren 8, 9 durch Division der von den beiden Spulen 63, 64 gemessenen Feldstärken. Zur Ermittlung der Drehzahl ist nur eine Spule notwendig, die die Unsymmetrie im Weicheisenzylinder erfaßt. Mit dieser Unsymmetrie kann jeweils eine vollständige Umdrehung der Welle 2 erfaßt werden, so daß aus der Umlaufzeit die Drehzahl errechnet wird. Durch die Division der beiden gemessenen Feldstärken wird die Unsymmetrie eliminiert, so daß der teilweise unterbrochene Weicheisenzylinder 121 nicht störend wirkt.

## Patentansprüche

1. Elektrowerkzeug mit einer Spannvorrichtung, die wenigstens einen mit dem Elektrowerkzeug fest verbundenen Sensor (5) zur Erfassung der Öffnungsweite der drehbaren Spannvorrichtung (1) aufweist, und mit einer Steuerung für die Drehzahl des Motors des Elektrowerkzeuges in Abhängigkeit von der vom Sensor (5) erfaßten Öffnungsweite der Spannvorrichtung (1), wobei der Sensor (5) ausgebildet ist, die Öffnungsweite (S) der Spannvorrichtung (1) im Stillstand des Elektromotors des Elektrowerkzeuges zu erfassen, dadurch gekennzeichnet, daß der Sensor (5) einen feststehenden Hall- oder magentoresistiven Sensor (L) aufweist, daß im Arbeitsbereich des Sensors (5) an der Spannvorrichtung (1) ein der Öffnungsweite (S) der Spannvorrichtung (1) entsprechend verschiebbarer, ringförmiger Magnetring oder Weicheisenzylinder (6) angeordnet ist, wobei zwischen dem Magnetring oder Weicheisenzylinder (6) und dem Sensor (5) ein Luftspalt vorgesehen ist, so daß zwischen dem Magnetring oder dem Weicheisenzylinder (6) und dem Sensor (5) keine Berührung stattfindet, und daß der Sensor (5) ausgebildet ist, die Position des Magnetringes bzw. des Weicheisenzylinders (6) zu erfassen.

2. Elektrowerkzeug nach Anspruch 1, dadurch gekennzeichnet, daß der Sensor (5) bei ausgeschaltetem Motorschalter ein der Öffnungsweite (S) in etwa proportionales Spannungssignal liefert.

3. Elektrowerkzeug nach Anspruch 2, dadurch gekennzeichnet, daß der Magnetring bzw. Weicheisenzylinder (6) auf einem Träger (7) befestigt ist, der von Spannbacken (8) der Spannvorrichtung (1) axial und spielfrei verschiebbar ist.

4. Elektrowerkzeug nach Anspruch 2 oder 3, dadurch gekennzeichnet, daß der Magnetring (6) als Dauermagnet ausgebildet ist.

5. Elektrowerkzeug nach einem der Ansprüche 2 bis 4, dadurch gekennzeichnet, daß der Magnetring (6) über den Umfang sinusförmig magnetisiert ist.

6. Elektrowerkzeug nach einem der vorhergehenden Ansprüche, dadurch gekennzeichnet, daß der Sensor (5) zwei Spulen (63, 64) aufweist, und daß durch den Quotienten der von den beiden Spulen (63, 64) gemessenen Signale die Lage des Magnetringes (6) bestimmbar ist.

7. Elektrowerkzeug nach einem der vorhergehenden Ansprüche, dadurch gekennzeichnet, daß der Sensor eine Spule (63) und eine Referenzspule (64) aufweist, daß die beiden Spulen (63, 64) in je einem Brückenzweig einer Auswerteschaltung angeordnet sind und daß die Brückenmittenspannung ein Maß für die Position des Magnetringes (6) ist.

8. Elektrowerkzeug nach einem der vorhergehenden Ansprüche, dadurch gekennzeichnet, daß der Magnetring (6) in Form einer Trommelscheibe (111) magnetisiert ist.

9. Elektrowerkzeug nach einem der vorhergehenden Ansprüche, dadurch gekennzeichnet, daß der Magnetring einen Weicheisenzylinder (121) aufweist, bei dem am Umfang ein Teil (122) ausgeschnitten ist, und daß ein entsprechendes Weicheisenzylinderteil (122) am feststehenden Spulenkörper des Sensors (5) angebracht ist.

## Claims

1. Electric power tool having a clamping device which has at least one sensor (5), which is permanently connected to the electric power tool, for detecting the opening width of the rotatable clamping device (1), and having means for controlling the rotational speed of the motor of the electric power tool as a function of the opening width, detected by the sensor (5), of the clamping device (1), the sensor (5) being designed to detect the opening width (S) of the clamping device (1) when the electric motor of the electric power tool is at a standstill, characterized in that the sensor (5) has a stationary Hall sensor or magnetoresistive sensor (L), in that within the operating range of the sensor (5) there is arranged on the clamping device (1) an annular magnetic ring or soft-iron cylinder (6) which can be displaced in accordance with the opening width (S) of the clamping device (1), an air gap being provided between the magnetic ring or soft-iron cylinder (6) and the sensor (5), so that no contact takes place between the magnetic ring or the soft-iron cylinder (6) and the sensor (5), and in that the sensor (5) is designed to detect the position of the magnetic ring or of the soft-iron cylinder (6).

2. Electric power tool according to Claim 1, characterized in that, when the motor switch is off, the sensor (5) supplies a voltage signal that is approximately proportional to the opening width (S).

3. Electric power tool according to Claim 2, characterized in that the magnetic ring or soft-iron cylinder (6) is fastened to a carrier (7) which can be displaced axially and without play by clamping jaws (8) of the clamping device (1).

4. Electric power tool according to Claim 2 or 3, characterized in that the magnetic ring (6) is designed as a permanent magnet.

5. Electric power tool according to one of Claims 2 to 4, characterized in that the magnetic ring (6) is magnetized sinusoidally over the circumference.

6. Electric power tool according to one of the preceding claims, characterized in that the sensor (5) has two coils (63, 64), and in that the location of the magnetic ring (6) can be determined via the quotient of the signals measured by the two coils (63, 64).

7. Electric power tool according to one of the preceding claims, characterized in that the sensor has a coil (63) and a reference coil (64), in that the two coils (63, 64) are each arranged in a bridge arm of an evaluation circuit, and in that the bridge diagonal voltage is a measure of the position of the magnetic ring (6).

8. Electric power tool according to one of the preceding claims, characterized in that the magnetic ring (6) is magnetized in the form of a drum sheave (111).

9. Electric power tool according to one of the preceding claims, characterized in that the magnetic ring has a soft-iron cylinder (121) in which one part (122) is cut out of the circumference, and in that a corresponding soft-iron cylinder part (122) is fitted to the stationary coil former of the sensor (5).

## Revendications

1. Outil électrique avec un mandrin comprenant au moins un capteur (5) relié solidairement à l'outil électrique pour détecter le degré d'ouverture du mandrin de serrage rotatif (1) et une commande de la vitesse de rotation du moteur de l'outil électrique en fonction du degré d'ouverture du mandrin (1), détecté par le capteur (5), le capteur (5) étant réalisé pour détecter le degré d'ouverture (S) du mandrin (1) à l'arrêt du moteur électrique de l'outil électrique,
caractérisé en ce que
- le capteur (5) comporte un capteur fixe (L) à effet Hall ou à effet magnéto-résistant,
- dans la plage active du capteur (5) au niveau du mandrin (1), un cylindre en fer doux ou bague magnétique annulaire (6), coulisse en fonction du degré d'ouverture (S) du mandrin (1),
- et entre la bague magnétique ou le cylindre en fer doux (6) et le capteur (5) subsiste un entrefer pour ne pas avoir de contact entre la bague magnétique ou le cylindre en fer doux (6) et le capteur (5) et
- le capteur (5) est réalisé pour détecter la position de la bague magnétique ou du cylindre de fer doux (6).

2. Outil électrique selon la revendication 1,
caractérisé en ce que
le capteur (5) fournit un signal de tension sensiblement proportionnel au degré d'ouverture (S) lorsque l'interrupteur du moteur est ouvert.

3. Outil électrique selon la revendication 2,
caractérisé en ce que
l'anneau magnétique ou le cylindre ou le fer doux (6) est fixé sur un support (7) coulissant axialement et sans jeu par les mors (8) du mandrin (1).

4. Outil électrique selon les revendications 2 ou 3,
caractérisé en ce que
la bague magnétique (6) est un aimant permanent.

5. Outil électrique selon les revendications 2 à 4,
caractérisé en ce que
la bague magnétique (6) est aimantée selon un profil sinusoïdal à sa périphérie.

6. Outil électrique selon l'une quelconque des revendications précédentes,
caractérisé en ce que
le capteur (5) comporte deux bobines (63, 64) et le rapport des signaux mesurés par les deux bobines (63, 64) définit la position de la bague magnétique (6).

7. Outil électrique selon l'une quelconque des revendications précédentes,
caractérisé en ce que
le capteur comporte une bobine (63) et une bobine de référence (64), les deux bobines (63, 64) étant montées chacune dans une branche d'un circuit d'exploitation en forme de pont et la tension médiane du pont est une mesure de la position de la bague magnétique (6).

8. Outil électrique selon l'une quelconque des revendications précédentes,
caractérisé en ce que
la bague magnétique (6) est aimantée sous la forme d'un disque de tambour (111).

9. Outil électrique selon l'une quelconque des revendications précédentes,
caractérisé en ce que
la bague magnétique comporte un cylindre en fer doux (121) dont une partie (122) est découpée à la périphérie et en ce qu'une partie de cylindre (122) en fer doux, appropriée, est prévue sur le corps de bobine fixe du capteur (5).
